# EUROPEAN PATENT SPECIFICATION

(11) **EP 2 332 888 B1**
(45) Date of publication and mention of the grant of the patent: **18.02.2015**
(21) Application number: 10193454.5
(22) Date of filing: 02.12.2010
(51) Int. Cl.: C02F 1/78

(54) **Sanitization device for water tanks**
Desinfizierungsvorrichtung für Wassertanks
Dispositif de désinfection pour réservoirs d'eau

(30) Priority: 04.12.2009 IT PD20090072 U
(43) Date of publication of application: 15.06.2011
(73) Proprietor: Cliber S.r.l., 37044 Cologna Veneta (VR) (IT)
(72) Inventor: Gallo, Pietro, I-30036, Santa Maria di Sala (VE) (IT)
(74) Representative: Gallo, Luca

(56) References cited:
- US-A1- 2005 017 380

## Description

### Field of application

The present invention relates to a sanitization device for water tanks, such as rain-water storage tanks, swimming pools, etc, and, in particular, for aquariums or garden ponds, according to the preamble of the independent main claim.

The device in question is intended to be advantageously used to improve the quality of the water in tanks which contain animals or aquatic plants, ensuring optimum oxygenation of the water and preventing the proliferation of undesirable micro-organisms therein.

In greater detail the sanitization device according to the invention is suitable for clarifying and cleansing the water contained inside the tanks, whether they be for public or domestic use.

### Background art

It is known that water tanks, in particular those which are intended for animals or aquatic plants, must be correctly maintained in order to prevent the proliferation, inside them, of undesirable micro-organisms or algae which may be harmful for the health of the animals or plants.

As is known, in fact, the water contained in tanks such as aquariums or garden ponds, swimming pools, etc., is normally replaced continuously by means of a water recirculation plant which comprises at least one water suction pipe which removes the dirty water from the tank and at least one delivery pipe which supplies the tank with clean water, whether it be the dirty water which has been filtered or a supply of fresh water. Nevertheless, the tanks, with time, tend to accumulate organic residue, such as food remainders, waste of animal origin or products resulting from the decomposition of plants, which, if not removed or not duly metabolized by the plants and animals which live in the tank, cause an increase in the concentration of phosphates and nitrates in the water and create an environment which is particularly favourable for the proliferation of micro-organisms and, in particular, algae. The latter adhere to the inner surface of the tanks, causing them to become opaque, and, depending on the species involved, tend to flocculate, forming aggregates which remain suspended in the water volume. Micro-organisms, algae and suspended aggregates reduce the clarity of the water and create conditions in which it is difficult for the animals and plants present inside the tank to survive.

In order to improve the quality of the water contained in tanks for animals and aquatic plants, water purification devices are available on the market, said devices being designed to eliminate the suspended aggregates, organic residue and any other extraneous matter which is present therein and is potentially damaging for the vegetable organisms and animals, as well as favour oxygenation of the water.

These purification devices generally comprise one or more filters through which the water contained in the tank is forced to pass by means of a pump.

In greater detail, the filters are arranged along the water recirculation plant, inside or outside the tank, and are usually of the mechanical type.

These mechanical filters usually comprise one or more layers consisting of filtering materials, such as sponge, fibre or synthetic resin, which are able to retain the particles suspended in the water.

The water circulation plant is generally associated with means for supplying air into the tank, comprising for example a pneumatic pump able to supply a constant stream of air bubbles inside the tank. The purpose of these air supply means is to improve the efficiency of the mechanical filters and increase oxygenation of the water. The air bubbles, in fact, become attached to the organic waste present in the water, conveying them to the surface and favouring accumulation thereof and consequently facilitating their removal by means of the filters.

Moreover, the air supply means create in the water a slight turbulence which favours gaseous exchanges on the free surface of the water in contact with the atmosphere. In this way, the quantity of oxygen dissolved in the water increases, consequently improving the cleanliness of the water itself.

However, the purification devices described briefly above in practice have proved to be not without drawbacks.

Firstly, the mechanical filters usually retain the coarsest aggregates, while they are unable to intercept the smaller-size particles. Moreover, these filters must be cleaned frequently since the aggregates intercepted by them are deposited inside them and accumulate with time. If they are not adequately maintained, therefore, the mechanical filters become clogged rapidly and become unusable.

These purification devices, finally, are unable to sanitize the water since they do not prevent algae and undesirable micro-organisms in general from proliferating inside the tank, but merely keep the water as clean as possible and well oxygenated.

In order to overcome this latter drawback, sanitization devices have been developed in order to reduce the microbial content of the water, preventing the proliferation inside the tank of pathogenic agents which may be the cause of disturbances or illnesses for the animal and the plants present inside the tank.

For example, sanitization devices equipped with an ultraviolet-ray sterilization lamp such as the device described in the patent WO200706255 are known.

This device comprises a box-shaped body which contains a pump, a filter and an ultraviolet-ray sterilization lamp. The box-shaped body is suitable for installation outside a tank, such as an aquarium, and is connected inside the latter via a suction pipe. By means of the pump, the water contained inside the tank is sucked through the suction pipe into the box-shaped body where it is filtered and sterilized by means of the bactericidal action of the ultraviolet radiation emitted by the lamp, before being introduced again into the tank.

These sanitization devices of the known type, however, may cause undesirable modifications in some of the organic molecules present in the water, as for example in the case of some proteins. Moreover, these devices chemically convert certain inorganic substances, favouring the formation of compounds which are harmful for the organisms living inside the tank. A further drawback of these devices of the known type is that they are unable to eliminate the micro-organisms which populate the bottom of the tank, or which live on the rocks or on the plants which may be present in the tank.

Water sanitization devices which make use of the disinfecting and microbicidal properties of ozone are also known. Ozone, in fact, is a gas which has a high oxidising power able to eliminate bacteria, fungi, spores as well as render the viruses inactive. The abovementioned sanitization devices which use ozone as a disinfecting agent have, however, a number of drawbacks.

Firstly high concentrations of ozone have toxic effects on animals and human beings and, therefore, these devices must be used with great care, paying particular attention to the amounts of ozone which are administered.

Moreover, precisely because of its high oxidising power, ozone has a very corrosive action on polymer materials. Therefore, the components of the device made using plastics, such as seals, air conveying pipes or the like, which come into contact with the ozone, are subject to rapid deterioration and must be frequently replaced.

### Disclosure of the invention

In this situation the underlying problem of the present invention is therefore to eliminate the drawbacks of the prior art mentioned above, providing a sanitization device for water tanks, which is able to improve effectively the quality of the water contained inside these tanks and therefore the quality of life of the vegetable and animal organisms present inside it.

Another object of the present invention is to provide a sanitization device for water tanks which is able to have an effective microbicidal action and prevent the proliferation of undesirable micro-organisms inside the tank.

A further object of the present invention is to provide a sanitization device for water tanks which is entirely safe for the health of the animals and plants which are present inside the tank.

Another object of the present invention is to provide a sanitization device for water tanks which has low costs and requires little maintenance.

A further object of the present invention is to provide a sanitization device for water tanks which is simple and inexpensive to produce and operationally entirely reliable.

### Brief description of the drawings

The technical features of the invention, in accordance with the abovementioned objects, may be clearly determined from the contents of the claims below and the advantages thereof will emerge more clearly from the following detailed description, provided with reference to the accompanying drawings which illustrate a number of purely exemplary and non-limiting embodiments thereof, where:
Fig. 1 shows a schematic side view of a first embodiment of the sanitization device according to the present invention;
Fig. 2 shows a schematic side view of a second embodiment of the sanitization device according to the present invention;
Fig. 2a shows a side view of a detail relating to means for supplying air into a tank associated with the sanitization device according to Fig. 2;

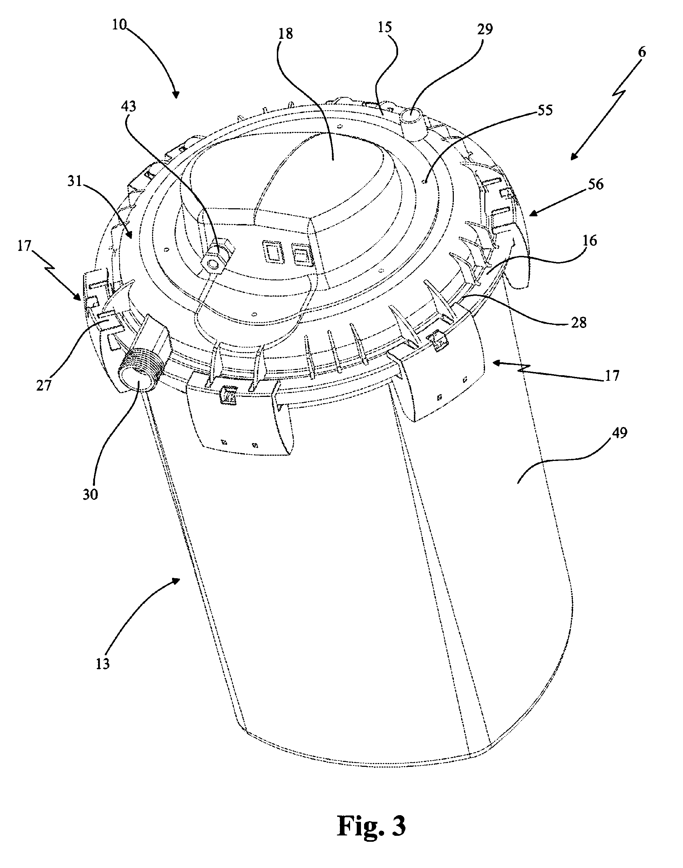

Fig. 3 shows a top perspective view of a detail of the sanitization device according to the present invention, relating to ionization means;
Fig. 4 shows a side view of the ionization means shown in Fig. 3;
Fig. 4a shows a cross-sectional view of the ionization means shown in Figure 3, along the line III-III of Fig. 4;

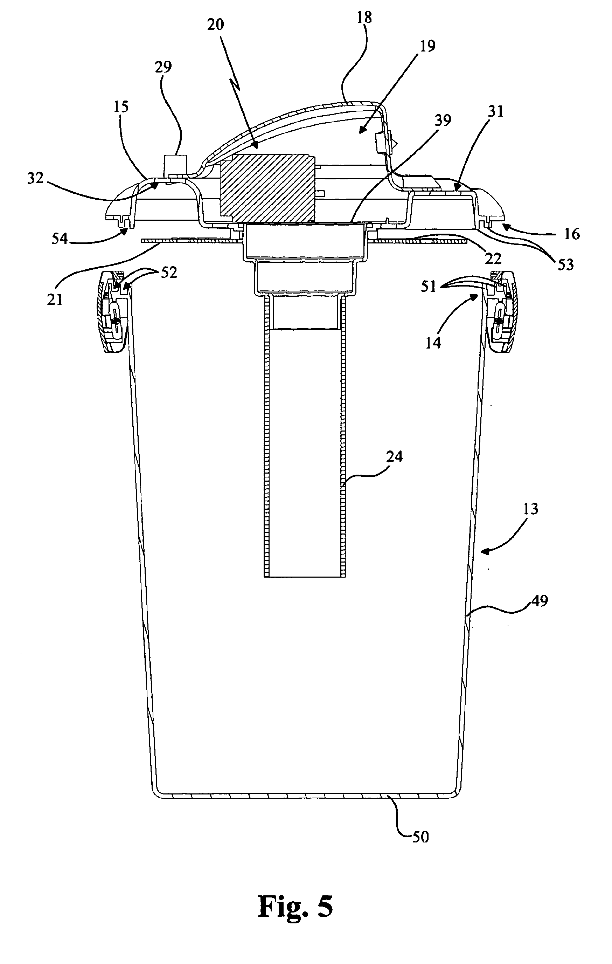

Fig. 5 shows a cross-sectional detail of the ionization means shown in Fig. 3, relating to a box-shaped body provided with a lid raised with respect to a container;

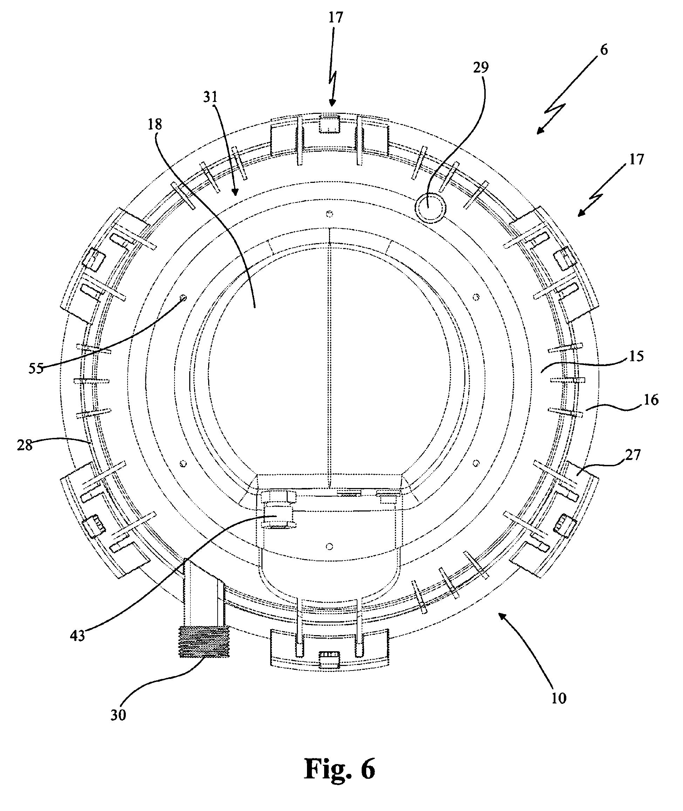

Fig. 6 shows a top view of the ionization means shown in Fig. 3;

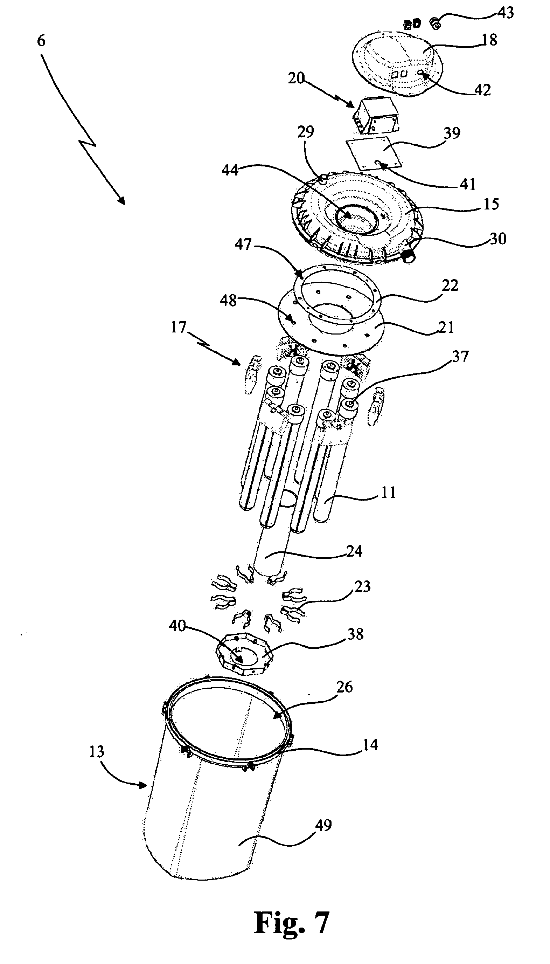

Fig. 7 shows an exploded view of the ionization means of the device for sanitizing water tanks according to the present invention.

### Detailed description of a preferred example of embodiment

With reference to the accompanying drawings, 1 denotes in its entirety an example of a sanitization device for water tanks according to the present invention.

The device 1, according to the invention, is suitable for being used for sanitization of the water contained inside tanks 4 of any kind, intended, in particular, for animals and/or aquatic plants, such as aquariums, garden ponds, small reservoirs, etc. In particular, the device 1 is able to eliminate the microbial content present in the water and on the inner walls of the tank 4 and has proved to be particularly effective in counteracting the proliferation of single-cell algae inside the tank 4, keeping the water clean and preventing the formation of encrustations on the inner walls of the tank and on the rocks or plants which may be present therein.

In greater detail, the sanitization device 1 comprises a pipe 2 for conveying an air flow 3, provided with at least one end 8 located inside the tank 4 below the free surface of the water, and supply means 5 able to draw this air flow 3 from the external environment and introduce it, via the pipe 2, inside the tank 4.

In accordance with the idea underlying the present invention, the device 1 comprises moreover ionization means 6 which are arranged along the pipe 2 upstream of the tank 4, for generating a concentration of ions inside the air flow 3. The ionization means 6 are located outside of the tank 4 and in a position remote from the latter and comprise a hermetic box-shaped body 10 inside which the air flow 3 is intended to flow from an inlet mouth 29 to an outlet mouth 30, respectively connected to two different sections of the air conveying pipe 2, denoted by 2' and 2", or 2a and 2b, in the accompanying figures. The box-shaped body 10 contains one or more capacitors 11 which, as will be explained more clearly below, interfere with the air flow which flows inside the box-shaped body 10 so as to generate inside it a concentration of ions, which are preferably both negative and positive.

In greater detail, the box-shaped body 10 comprises a container 13 and a lid 15 which can be placed over the opening 26 of the container 13, so as to close it hermetically. The container 13 is preferably made of plastic, has a substantially cylindrical shape and is formed by a side wall 49 and by an end wall 50 connected to the bottom end of the side wall 49. The top end of the side wall 49 defines with a first peripheral edge 14 the opening 26 of the container 13.

The first peripheral edge 14 of the container 13 defines, by means of three first parallel ribs 51, two first perimetral seats 52 and has a profile in the form of a double U directed towards the outside of the container 13. The lid 15, in turn, has a second edge 16 which extends peripherally on the inner side 32 of the lid 15 and is able to mate with the first peripheral edge 14 of the container 13 so as to close it hermetically. The second peripheral edge 16 of the lid 15 has preferably a U-shaped profile defined by two second parallel ribs 53 which extend downwards from the inner side 32 of the lid 15 and define a corresponding second perimetral seat 54. When the lid 15 is placed so as to close the container 13, the first seats 52 of the first peripheral edge 14 of the container 13 receive the second ribs 53 of the second peripheral edge 16 of the lid 15 forming, advantageously via a seal arranged in between, a hermetically sealed interlocking joint. Obviously, the joint between lid 15 and container 13 may be formed by shaping differently the peripheral edges, while always preferably providing correspondingly shaped parts which can be removably engaged with each other.

Advantageously, the container 13 is provided with locking means 17 for keeping the second peripheral edge 16 of the lid 15 pressed against the first peripheral edge 14 of the container 13, ensuring hermetic closure of the lid 15 on the container 13. These locking means 17 are movable between a disengaged position, where they release the lid 15 which can be consequently removed from the container 13, and an engaged position, where the they keep the lid 15 closed on the opening 26 of the container 13. In accordance with a preferred embodiment of the invention, the locking means 17 comprise two or more levers 56 which are pivotably mounted on the container 13 in the vicinity of the first peripheral edge 14 and provided with an engaging portion 27, able to engage inside an engaging seat 28 formed on the outer side 31 of the lid 15, along its second peripheral edge 16, so as to force the latter against the first peripheral edge 14 of the container 13, when the locking means 17 are in the engaged position. Obviously, the levers 56, in a similar manner, may be pivotably mounted on the lid and engage with the first peripheral edge 14 of the container 13 so as to keep the lid 15 hermetically closed on the latter.

Advantageously, the air inlet mouth 29 and outlet mouth 30 are both arranged on the lid 15 of the box-shaped body 10.

The box-shaped body 10 comprises a lid cover piece 18 which is fixed to the outer side 31 of the lid 15 by means of first screws 55, so as to define together with the latter a containing compartment 19.

The box-shaped body 10 also comprises a support base 21 which is made of electrically insulating material and which is fixed to the inner side 32 of the lid 15 by means of second screws 45 and supports, suspended, the capacitors 11. In greater detail, as specified more fully below, the support base 21 supports a first electrode 35 which is common to all the capacitors 11 and is provided with a plurality of first holes 48 which receive, inserted therein, third screws 37 which are fixed projecting at one end of the capacitors 11 so as to allow mechanical connection thereof to the lid, in addition to electrical connection thereof.

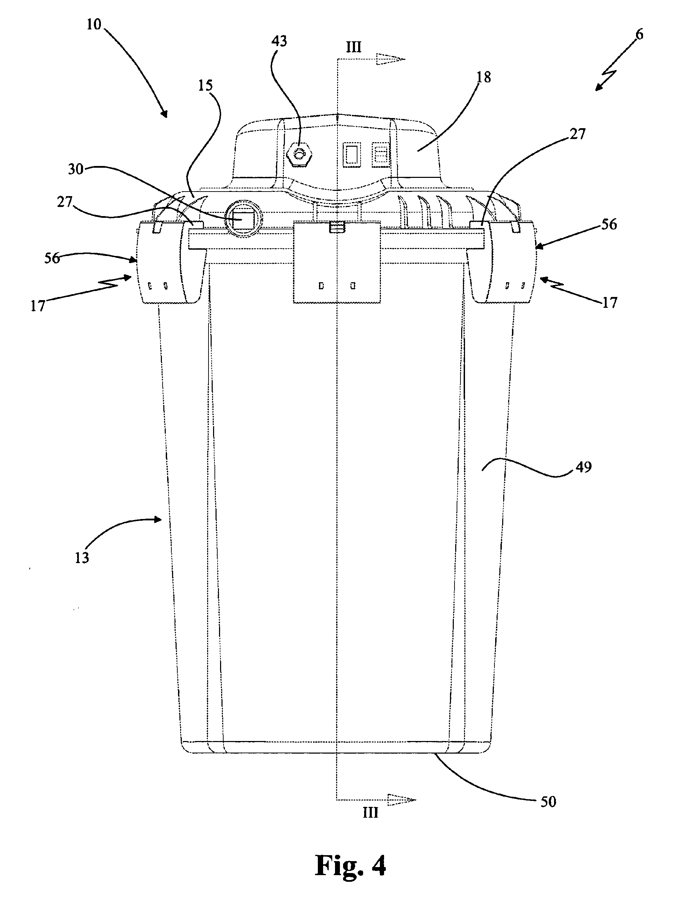

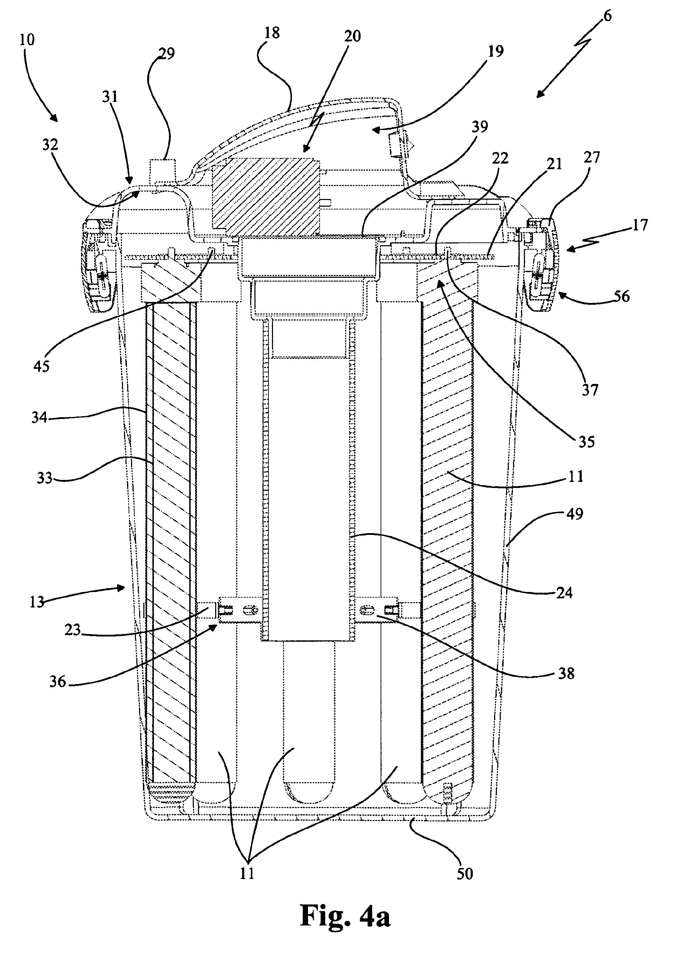

Each electrical capacitor 11 is provided with two cylindrical plates, i.e. a first inner plate 33 and a second outer plate 34 facing the first one, which are separated by a dielectric, between which plates an alternating voltage is applied so as to charge the said plates with an alternately positive and negative charge. For the sake of illustrational simplicity, the two plates have been shown solely in Figure 4a.

The ionization means 6 comprise power supply means 20 for electrically powering the capacitors 11, which power supply means 20 are advantageously housed inside the containing compartment 19 defined, as mentioned above, between the lid cover piece 18 and the lid 15.

In greater detail, according to a preferred embodiment of the present invention, the power supply means 20 comprise a power supply cable which is introduced inside the containing compartment 19 via a fourth hole 42 formed in the lid cover piece 18. The abovementioned cable, which is fixed to the lid cover piece 18 by means of a first cable clamp 43, supplies a voltage booster able to power the capacitors 11 with a high voltage of the order of a few kV. The power supply cable also powers an electronic board which is able to control the voltage value generated by the voltage booster. The electronic board and the voltage booster are contained inside the containing compartment 19, guaranteeing the safety of the operators who are prevented from inadvertently coming into contact with these electric/electronic components and ensuring safe operation of the device, since the electrical and electronic components of the ionization means are completely isolated.

The power supply means 20 are electrically connected to the inner plate 33 of each capacitor 11 via a first electrode 35. The latter is advantageously formed by means of a first conducting plate 22 which is made of a conductive material and has an annular shape so as to power simultaneously all the capacitors. The abovementioned conducting plate 22 is fixed to the support base 21 and has a plurality of second holes 47 which are aligned with the first holes 48 in the support base 21. Threaded metal eyelets are fixed inside the second holes 47. The third screws 37, mentioned above, fixed to an end of each capacitor 11 are electrically connected to the inner plate 33 of the capacitors 11 and may be engaged by means of screwing inside the eyelets of the first conducting plate 22 and if necessary also inside the corresponding hole 48 of the support base 21. A second electrode 36 connected to earth is electrically connected to the outer plates 34 of the capacitors 11 and is formed by means of a second conducting plate 38 which is also made of a conducting material and which supports peripherally several spring clips 23, each of which can be removably fastened to the outer plate 34 of a corresponding capacitor 11. The capacitors 11 therefore have the form of a plurality of cylindrical bodies which extend along the entire length of the associated plate and are suspended radially from the lid 15 parallel to each other around a circumference.

Advantageously, the box-shaped body 10 comprises a tubular element 24 which is fixed to the inner side 32 of the lid 15 (or forms one piece therewith) opposite a central opening 44. The abovementioned tubular element 24 is inserted coaxially inside the container 13 along a section thereof and is arranged in a central position with respect to the capacitors 11 with which it is aligned. The cables of the power supply means 20 for electrical connection of the spring clips 23 are housed inside the tubular element 24. The central opening 44 in the lid 15 connects the containing compartment 19 to the inside of the tubular element 24 and is closed by a metal plate 39. A third hole 31 formed in the metal plate 39 receives, with the aid of second cable clamp, the earth connection cable of the outer plates 34 of the capacitors 11.

The tubular element 24 supports externally the second conducting plate 38 of the second electrode 36, which has advantageously a fifth central hole 40 for coaxially receiving the tubular element 24. The spring clips 23 which retain the capacitors 11 are fixed radially, for example by means of screws, to folded edges of the second conducting plate 38.

The box-shaped body 10, in accordance with the preferred embodiment shown in the accompanying figures, has a cylindrical shape and the support base 21 has an annular shape and is passed through centrally by the tubular element 24. The capacitors 11 are fixed to the support base 21, i.e. to the lid 15, and are arranged circumferentially around the tubular element 24.

The capacitors 11 are preferably powered by the power supply means 20 for example with a sinusoidal voltage wave at a frequency of 50 Hz having an effective voltage value of 2,850 V.

Preferably the ionization means 6 comprise a switch connected to the box-shaped body 10 and designed to interrupt the electrical connection between the power supply means 20 and the capacitors 11 when the lid 15 is raised from the container 13.

In operational terms, the electrical capacitors 11 ionize the air flow 3 which passes through the box-shaped body 10 of the ionization means 6 and which, continuing inside the pipe 2, is introduced into the tank 4, allowing sanitization of the water contained therein.

In greater detail, the nitrogen and oxygen present in the air in molecular form have an electrical axis which follows the force lines of the electric field generated by the capacitors 11, which force lines are variable in time and space around the said capacitors 11. This causes vibration of the molecules, increasing the energy during collision between the molecules. The collision between the molecules resulting from this vibration produce, around the capacitors 11, molecular ions substantially without the formation of ozone. At the ambient temperatures the energy exchanged during collision between the molecules is very small and therefore the probability of molecular ions being formed is low. In the isolating electric field produced by the capacitor the air molecules are directed aligned along the lines of the time-variable field. Consequently the collisions due to the polarization vibration of the molecules are more vigorous and the formation of molecular ions is more frequent. The molecular ions aggregate in the form of ion chains which, owing to their high reactivity, are able to combine again with other molecules present in the air, forming groups of molecules. The energy required to form these aggregations is produced both by the thermal agitation and by the impacts between the molecular ions.

The molecular ions thus formed and introduced into the water are obviously responsible for the oxidoreducing effects on all the polluting molecules which the water contains. In greater detail, the ions introduced with the air flow in the water, by means of solvation form hydrated ions, i.e. each ion attracts around it one or more polar water molecules. The hydrated ions therefore reach the polluting molecules, so as to bond chemically with them.

The ionized air flow introduced into the tank 4 causes sanitization of the water contained therein, interacting with the micro-organisms present in the water itself and on the inner walls of the tank. Moreover, the ionized molecules also combine with the particles responsible for the cloudiness of the water, causing disintegration and therefore elimination thereof, i.e. clarifying the water.

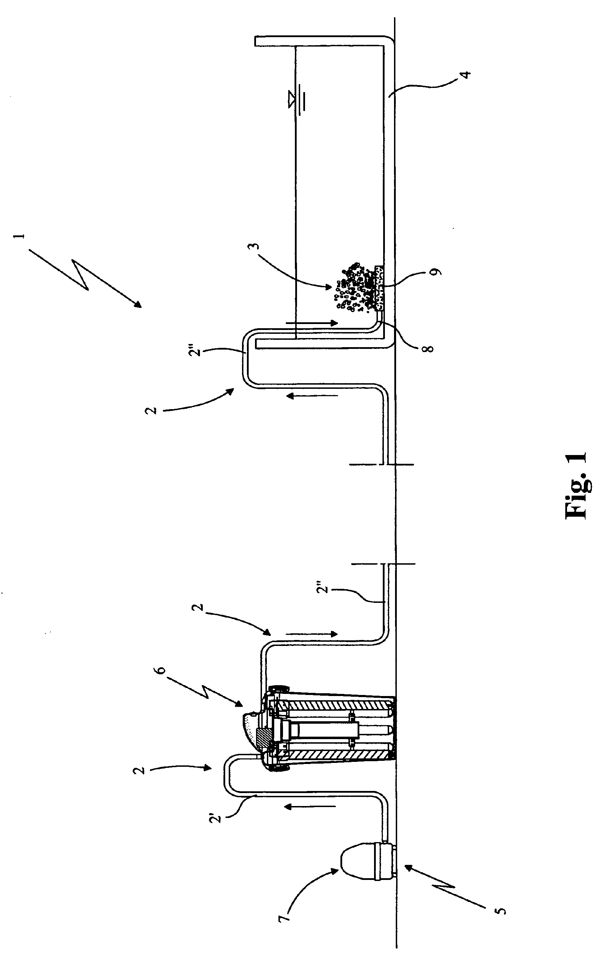

Two possible embodiments of the device 1 are shown in the accompanying drawings. In accordance with a first embodiment, shown in particular in Figure 1, the means 5 for supplying the air flow 3 into the tank 4 comprise a blower 7 which is designed to blow in air through the ionization means 6, via a first delivery section 2' of the pipe 2, and convey it inside the tank 4, via a second delivery section 2" of the pipe 2. In this case, the ionization means 6 are located downstream of the supply means 5 and upstream of the tank 4. The first delivery section 2' of the air conveying pipe 2 connects the blower 7 to the ionization means 6, while the second delivery section 2" connects the ionization means 6 to the tank 4.

Advantageously the second delivery section 2" terminates inside the tank 4 with a first end 8 which rests against a porous stone 9. The purpose of the latter is to diffuse the air flow 3 introduced by the second delivery section 2" inside the tank 4, favouring the formation of micro bubbles of air inside the water, which ensure better dispersion of the ionized air inside the tank 4 and therefore improved sanitization and oxygenation of the water itself.

When the blower 7 is operational, the pressure inside the box-shaped body 10 of the ionization means 6 and inside the air conveying pipe 2 is higher than the atmospheric pressure. The blower 7 in fact pushes pressurized air through the first delivery section 2', forcing the air itself to pass through the ionization means 6 so as to be then introduced, via the second delivery section 2" and the porous stone 9, into the tank 4. Owing to the hermetic closure formed by the lid 15 on the container 13, it is possible to increase the pressure inside the box-shaped body 10, for example up to as high as 1 bar, without undesirable air leaks occurring.

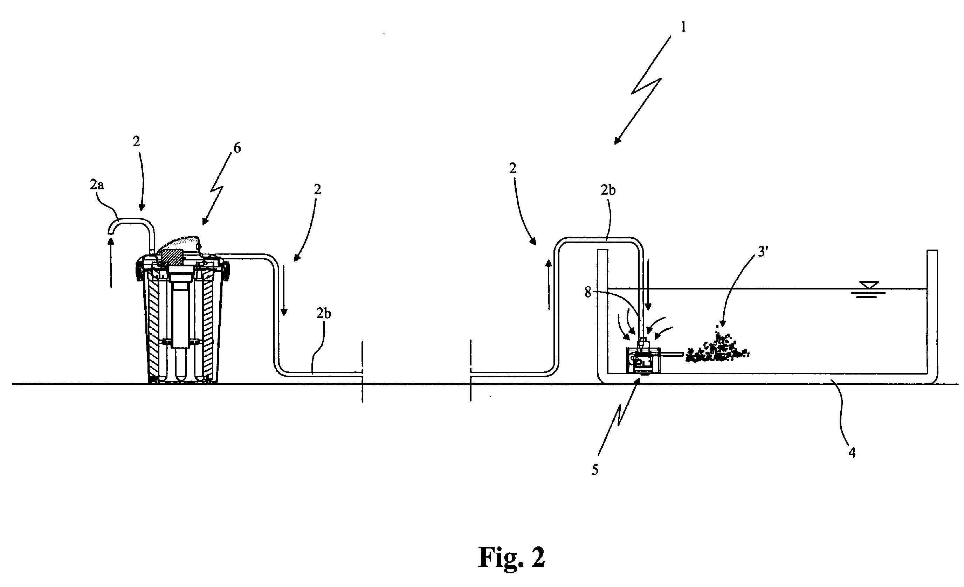

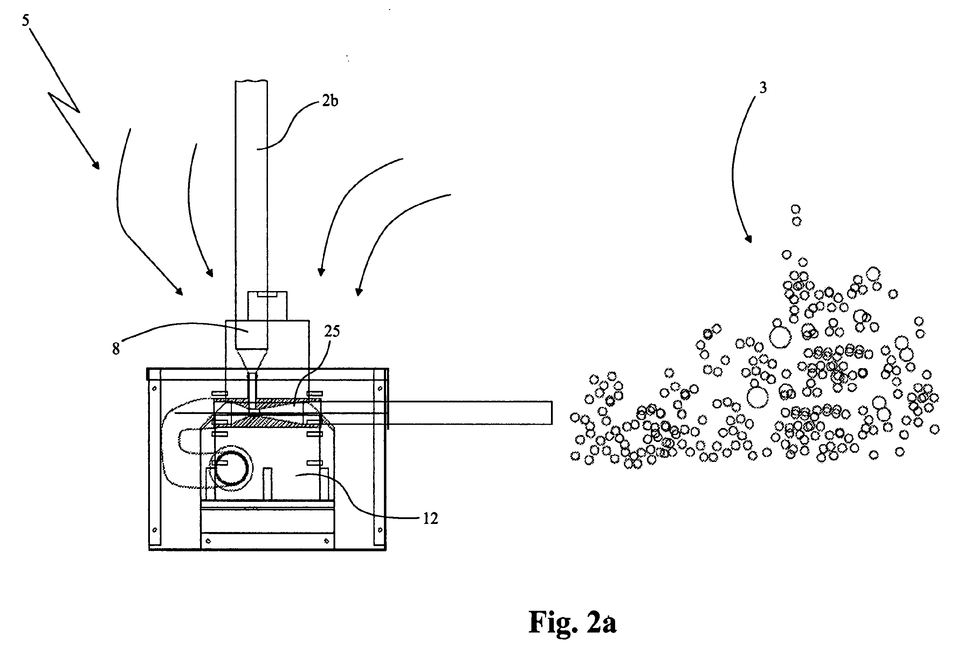

In accordance with a second embodiment of the device 1 shown in particular in Figure 2, the supply means 5 for introducing the air flow 3 into the tank 4 are arranged inside the tank 4 itself, downstream of the ionization means 6.

In greater detail, in this case, as shown in Figure 2a, the supply means 5 comprise a hydraulic pump 12 which introduces a water flow into the tank via the Venturi tube 25 connected, along its narrower section, to the air conveying pipe 2. The latter, in particular, comprises a first intake section 2a, which draws air from the environment so as to introduce it into the ionization means 6, and a second intake section 2b, which connects the ionization means 6 to the Venturi tube of the supply means 5 and therefore to the tank 4.

The Venturi tube 25 sucks in, by means of the reduced pressure, the ionized air from the ionization means 6, along the second intake section 2b of the air conveying pipe 2 and introduces a mixture of water and ionized air into the tank 4. When the means 5 for introducing the air flow 3 into the tank 4 are operational, the pressure inside the box-shaped body 10 of the ionization means 6 and inside the air conveying pipe 2 is lower than atmospheric pressure. By means of the action of the Venturi tube 25, in fact, the air is drawn from the environment via the first intake section 2a, via the ionization means 6 and then via the second intake section 2b so as to be supplied, mixed together with the water drawn by the pump 12, into the tank 4. The second intake section 2b of the air conveying pipe 2 advantageously has, arranged along it, a non-return valve which prevents the flow of water from the pump 12 to the ionization means 6 in order to prevent damage to the latter and the risk of an electrical short-circuit.

The remote arrangement of the tank 4 is particularly advantageous since the ionization means 6, if arranged in the vicinity of the tank 4 or inside the tank 4, could result in an aesthetically unpleasing arrangement.

The choice of the capacitors 11 for ionization of the air intended to sanitize the water inside the tank 4 has proved to be advantageous choice since the variety of ions produced using these ionization means 6 are able to achieve a surprisingly high quality of water sanitization.

The device thus conceived therefore achieves the predefined objects.

Obviously, it may assume, during its practical realization, also forms and configurations different from that illustrated above, without thereby departing from the present scope of protection.

Moreover, all the details may be replaced by technically equivalent elements and the dimensions, the forms and the materials used may be of any nature according to requirements.

## Claims

1. Sanitization device for water tanks, comprising:
- at least one pipe (2) for conveying an air flow (3), provided with at least one end (8) situated inside a tank (4);
- supply means (5) connected to said pipe (2) and able to convey said air flow (3) inside it and introduce it into said tank (4);
**characterized in that** it comprises ionization means (6) which are located outside of said tank and arranged along said pipe (2) upstream of said tank (4) and interfere with said air flow (4), generating a concentration of ions inside it;
said ionization means (6) comprising a hermetic box-shaped body (10) inside which said air flow (3) is intended to flow from at least its inlet mouth (29) to at least its outlet mouth (30);
said box-shaped body (10) containing one or more capacitors (11) which interfere with the air flow which flows inside the box-shaped body (10) so as to generate inside it a concentration of ions, substantially without the formation of ozone.

2. Device according to Claim 1, **characterized in that** said supply means (5) for introducing said air flow (3) into said tank (4) comprise at least one blower (7) which introduces air into said pipe (2), propelling it, through said ionization means (6), as far as said tank (4), said ionization means (6) being located downstream of said supply means (5) and upstream of said tank (4).

3. Device according to Claim 1, **characterized in that** said supply means (5) for introducing said air flow (3) into said tank (4) are arranged inside said tank (4), downstream of said ionization means (6), and comprise at least one hydraulic pump (12) which introduces into said tank (4) a flow of water through at least one Venturi tube (25) which is connected to said pipe (2), said Venturi tube (25) drawing in ionized air from said pipe (2) and introducing a mixture of water and ionized air into said tank (4).

4. Device according to Claim 1, **characterized in that** said box-shaped body (10) comprises a container (13) provided with a first peripheral edge (14) defining the opening (26) of said container (13), and a lid (5) provided with a second peripheral edge (16) which is correspondingly shaped with respect to the first peripheral edge (14) of said container (13) and able to be arranged on the first peripheral edge (14) of said container (13) so as to form a hermetic closure, locking means (17) being provided so as to keep the second correspondingly shaped peripheral edge (16) of said lid (15) pressed and sealed against the first peripheral edge (14) of said container (13), via said hermetic closing lid (15) of said container (13).

5. Device according to Claim 4, **characterized in that** said box-shaped body (10) defines a containing compartment (19), in particular by means of lid cover piece (18) fixed to an outer side (31) of said lid (15) and **characterized in that** said ionization means (16) comprise at least one capacitor (11) and power supply means (20) for electrically powering said at least one capacitor (11), which power supply means (20) are housed inside said containing compartment (19).

6. Device according to Claim 5, **characterized in that** said box-shaped body (10) comprises a support base (21) which is fixed to the inner side (32) of said lid (15) and supports said at least one capacitor (11).

7. Device according to Claim 6, **characterized in that** said at least one capacitor (11) is provided with two cylindrical plates which are separated by a dielectric and between which an alternating voltage is formed and **characterized in that** said power supply means (20) are electrically connected to the two plates of said at least one capacitor (11) by means of a first electrode (35) and a second electrode (36); said first electrode (35) comprising a first conducting plate (22) supported by said support base (21) and a third screw (37) electrically connected to the inner plate (33) of said capacitor (11) and to said first conducting plate (22).

8. Device according to Claim 7, **characterized in that** said second electrode (36) comprises at least one spring clip (23) which can be removably fastened to the outer plate (34) of said at least one capacitor (11).

9. Device according to Claim 8, **characterized in that** a tubular element (24) inside which at least one cable for electrical connection to said spring clip (23) extends inside said container (13), on the inner side (32) of said lid (15), from a central opening (44) formed in said lid (15).

10. Device according to Claim 5, **characterized in that** said ionization means (6) comprise a switch which is connected to said box-shaped body (10) and designed to interrupt the electrical connection between said power supply means (2) and said at least one capacitor (11), when said lid (15) is raised from said container (13).

## Patentansprüche

1. Desinfizierungsvorrichtung für Wassertanks, die Folgendes umfasst:
- mindestens eine Leitung (2) für den Transport eines Luftstroms (3), die mit wenigstens einem im Inneren eines Beckens (4) untergebrachten Ende (8) ausgestattet ist;
- Einlassvorrichtungen (5), die an die genannte Leitung (2) angeschlossen und geeignet sind, den genannten Luftstrom (3) in ihrem Inneren weiter zu transportieren, bis dieser in das genannte Becken (4) eingeleitet wird;
**dadurch gekennzeichnet, dass** sie Ionisierungsvorrichtungen (6) umfasst, die sich außerhalb des genannten Beckens befinden, die genannte Leitung (2) vor dem genannten Becken (4) schneiden und auf den genannten Luftstrom (3) wirken und in seinem Inneren eine Ionenkonzentration erzeugen;
wobei die genannten Ionisierungsvorrichtungen (6) ein hermetisches Kastengehäuse (10) umfassen, in dem der genannte Luftstrom (3) aus wenigstens einer Eingangsmündung (29) zu wenigstens einer Ausgangsmündung (30) fließen soll;
wobei das genannte Kastengehäuse (10) einen oder mehreren Kondensatoren (11) enthält, die auf den Luftstrom wirken, der im Inneren des Kastengehäuses (10) fließt, um in dessen Innerem eine Ionenkonzentration im Wesentlichen ohne Ozonbildung zu erzeugen.

2. Vorrichtung nach Anspruch 1, **dadurch gekennzeichnet, dass** die genannten Einlassvorrichtungen (5) zum Einleiten des genannten Luftstroms (3) in das genannte Becken (4) mindestens ein Gebläse (7) umfassen, das Luft in das Innere der genannten Leitung (2) und dabei über die Ionisierungsvorrichtungen (6) bis in das genannte Becken (4) leitet, wobei die genannten Ionisierungsvorrichtungen (6) nach den genannten Einlassvorrichtungen (5) und vor dem genannten Becken (4) positioniert sind.

3. Vorrichtung nach Anspruch 1, **dadurch gekennzeichnet, dass** die genannten Einlassvorrichtungen (5) zum Einleiten des Luftstroms (3) in das genannte Becken (4) im Inneren des genannten Beckens (4) nach den genannten Ionisierungsvorrichtungen (6) positioniert sind und wenigstens eine Hydraulikpumpe (12) umfassen, die in das genannten Becken (4) einen Wasserfluss über wenigstens ein an die genannte Leitung (2) angeschlossenes Venturi-Rohr (25) einleitet, wobei das Venturi-Rohr (25) ionisierte Luft aus der genannten Leitung (2) ansaugt, um in das genannte Becken (4) eine Mischung aus Wasser und ionisierter Luft einzuleiten.

4. Vorrichtung nach Anspruch 1, **dadurch gekennzeichnet, dass** das genannte Kastengehäuse (10) einen Behälter (13) mit einem ersten umlaufenden Rand (14) umfasst, der die Öffnung (26) des genannten Behälters (13) begrenzt und einen mit einem zweiten umlaufenden Rand ausgestatteten Deckel (15), der ein Gegenprofil zum ersten umlaufenden Rand (14) des genannten Behälters (13) bildet und geeignet ist, hermetisch abschließend auf dem ersten umlaufenden Rand (14) des genannten Behälters (13) positioniert zu werden, Sperrvorrichtungen (17), die dazu dienen, das Gegenprofil des zweiten umlaufenden Rands (16) des genannten Deckels (15) auf dem ersten umlaufenden Rand (14) des genannten Behälters (13) unter Druck und abgedichtet mit dem genannten Deckel (15) zu halten, um den genannten Behälter (13) hermetisch abzudichten.

5. Vorrichtung nach Anspruch 4, **dadurch gekennzeichnet, dass** das genannte Kastengehäuse (10) einen Sicherheitsraum (19) definiert, insbesondere anhand eines Überdeckels (18), der an einer Außenseite (31) des genannten Deckels (15) befestigt ist und dadurch, dass die genannten Ionisierungsvorrichtungen (6) wenigstens einen Kondensator (11) und Versorgungsvorrichtungen (2) umfassen, um den genannten wenigstens einen Kondensator (11) elektrisch zu versorgen, wobei die Versorgungsvorrichtungen (20) im Inneren des genannten Sicherheitsbehälters (19) untergebracht sind.

6. Vorrichtung nach Anspruch 5, **dadurch gekennzeichnet, dass** das genannte Kastengehäuse (10) eine tragende Basis (21) umfasst, die an der Innenseite (32) des genannten Deckels (15) befestigt ist und den genannten wenigstens einen Kondensator (11) trägt.

7. Vorrichtung nach Anspruch 6, **dadurch gekennzeichnet, dass** der genannte wenigstens eine Kondensator (11) mit zwei durch ein Dielektrikum getrennten zylindrischen Verstärkungen ausgestattet ist, zwischen denen eine Wechselspannung erzeugt wird und dadurch, dass die genannten Versorgungsvorrichtungen (20) elektrisch an die beiden Verstärkungen des genannten wenigstens einen Kondensators (11) mittels einer ersten Elektrode (35) und einer zweiten Elektrode (36) angeschlossen sind; wobei die genannte erste Elektrode (35) eine erste leitfähige Platte (22) umfasst, die von der genannten tragenden Basis (21) und einer dritten Schraube (37) gehalten wird, die elektrisch an die innere Verstärkung (33) des genannten Kondensators (11) und die genannte erste leitfähige Platte (22) angeschlossen ist.

8. Vorrichtung nach Anspruch 7, **dadurch gekennzeichnet, dass** die genannte zweite Elektrode (36) wenigstens eine abnehmbare Klammer (23) umfasst, die an der äußeren Verstärkung (34) des genannten wenigstens einen Kondensators (11) verankert werden kann.

9. Vorrichtung nach Anspruch 8, **dadurch gekennzeichnet, dass** von der Innenfläche (32) des genannten Deckels (15) ausgehend von einer in dem genannten Deckel (15) angebrachten zentralen Öffnung (44) in dem genannten Behälter (13) ein Rohrelement (24) verläuft, in dem wenigstens ein Kabel für den elektrischen Anschluss an die genannte Klammer (23) untergebracht ist.

10. Vorrichtung nach Anspruch 5, **dadurch gekennzeichnet, dass** die genannten Ionisierungsvorrichtungen (6) einen Schalter umfassen, der an das genannte Kastengehäuse (10) angeschlossen und geeignet ist, den elektrischen Anschluss zwischen den genannten Versorgungsvorrichtungen (20) und dem genannten wenigstens einen Kondensator (11) zu unterbrechen, wenn der genannte Deckel (15) auf dem genannten Behälter (13) angehoben ist.

## Revendications

1. Dispositif de désinfection pour réservoirs d'eau comprenant :
- au moins un conduit (2) pour le transport d'un flux d'air (3), muni d'au moins une extrémité (8) située à l'intérieur d'un réservoir (4) ;
- moyens d'injection (5) raccordés audit conduit (2) et appropriés à faire avancer ledit flux d'air (3) à son intérieur jusqu'à l'injecter dans ledit réservoir (4) ;
**caractérisé en ce qu'**il comprend des moyens de ionisation (6) lesquels sont situés à l'extérieur dudit réservoir, interceptent ledit conduit (2) en amont dudit réservoir (4) et interfèrent avec ledit flux d'air (4) en engendrant à son intérieur une concentration de ions ;
lesdits moyens de ionisation (6) comprennent un corps en forme de boîte (10), étanche, dans lequel ledit flux d'air (3) est destiné à s'écouler d'au moins une de ses bouches d'entrée (29) à au moins une de ses bouches de sortie (30) ;
ledit corps en forme de boîte (10) contenant un ou plusieurs condensateurs (11) qui interfèrent avec le flux d'air qui s'écoule à l'intérieur du corps en forme de boîte (10) de sorte à produire à son intérieur une concentration d'ions, essentiellement sans la formation d'ozone.

2. Dispositif selon la revendication 1, **caractérisé en ce que** lesdits moyens d'injection (5) dudit flux d'air (3) dans ledit réservoir (4) comprennent au moins une soufflante (7), laquelle injecte de l'air à l'intérieur dudit conduit (2), en le poussant, à travers lesdits moyens de ionisation (6), jusqu'à l'intérieur du réservoir (4), lesdits moyens de ionisation (6) étant placés en aval desdits moyens d'injection (5) et en amont dudit réservoir (4).

3. Dispositif selon la revendication 1, **caractérisé en ce que** lesdits moyens d'injection (5) dudit flux d'air (3) dans ledit réservoir (4) sont disposés à l'intérieur dudit réservoir (4), en aval desdits moyens de ionisation (6), et comprennent au moins une pompe hydraulique (12) laquelle injecte dans ledit réservoir (4) un débit d'eau à travers au moins un tube de Venturi (25) raccordé audit conduit (2), ledit tube de Venturi (25) aspirant de l'air ionisé dudit conduit (2), pour injecter dans ledit réservoir (4) un mélange d'eau et d'air ionisé.

4. Dispositif selon la revendication 1, **caractérisé en ce que** ledit corps en forme de boîte (10) comprend un contenant (13) muni d'un premier bord périphérique (14), qui délimite l'ouverture (26) dudit contenant (13), et un couvercle (15) muni d'un deuxième bord périphérique (16) contreprofilé par rapport au premier bord périphérique (14) dudit contenant (13) et susceptible d'être placé à fermeture étanche sur le premier bord périphérique (14) dudit contenant (13), des moyens de blocage (17) étant prévus pour maintenir le deuxième bord périphérique (16) contreprofilé dudit couvercle (15) en pression et étanche sur le premier bord périphérique (14) dudit contenant (13), avec ledit couvercle (15) à fermeture étanche dudit contenant (13).

5. Dispositif selon la revendication 4, **caractérisé en ce que** ledit corps en forme de boîte (10) définit un compartiment de rétention (19), en particulier moyennant un surcouvercle (18) fixé à une face externe (31) dudit couvercle (15) et **caractérisé en ce que** lesdits moyens de ionisation (6) comprennent au moins un condensateur (11), et des moyens d'alimentation (20) pour alimenter électriquement ledit au moins un condensateur (11), lesquels moyens d'alimentation (20) sont logés à l'intérieur dudit compartiment de rétention (19).

6. Dispositif selon la revendication 5, **caractérisé en ce que** ledit corps en forme de boîte (10) comprend une embase (21), laquelle est fixée à la face interne (32) dudit couvercle (15) et soutien au moins un desdits condensateurs (11).

7. Dispositif selon la revendication 6, **caractérisé en ce que** ledit au moins un condensateur (11) est muni de deux armatures cylindriques séparées par un diélectrique, entre lesquelles est réalisée une tension alternative et **caractérisé en ce que** lesdits moyens d'alimentation (20) sont électriquement connectés aux deux armatures dudit au moins un condensateur (11) moyennant une première électrode (35) et une deuxième électrode (36) ; ladite première électrode (35) comprenant une première plaque conductrice (22), soutenue par ladite embase (21) et une troisième vis (37) connectée électriquement à l'armature interne (33) dudit condensateur (11) et à ladite première plaque conductrice (22).

8. Dispositif selon la revendication 7, **caractérisé en ce que** ladite deuxième électrode (36) comprend au moins une pince (23) amoviblement ancrable à l'armature externe (34) dudit au moins un condensateur (11).

9. Dispositif selon la revendication 8, **caractérisé en ce que** depuis la face interne (32) dudit couvercle (15), à partir d'une ouverture centrale (44) réalisée dans ledit couvercle (15), se développe dans un contenant (13) un élément tubulaire (24) dans lequel est logé au moins un câble de branchement électrique sur ladite pince (23).

10. Dispositif selon la revendication 5, **caractérisé en ce que** lesdits moyens de ionisation (6) comprennent un interrupteur relié audit corps en forme de boîte (10) et approprié à interrompre la connexion électrique entre lesdits moyens d'alimentation (20) et ledit au moins un condensateur (11), lorsque ledit couvercle (15) est soulevé dudit contenant (13).
